# EUROPEAN PATENT SPECIFICATION

(11) **EP 3 592 148 B1**
(45) Date of publication and mention of the grant of the patent: **31.07.2024**
(21) Application number: 18708692.1
(22) Date of filing: 06.03.2018
(51) Int. Cl.: A01N 37/08, A01N 3/02, A01P 21/00

(54) **USE OF BETA-CYCLOCITRIC ACID OR A SALT THEREOF TO ENHANCE PLANT TOLERANCE TO DROUGHT STRESS**
VERWENDUNG VON BETA-CYCLO-ZITRONENSÄURE ODER EINES SALZES DAVON ZUR VERBESSERUNG DER TOLERANZ VON PFLANZEN GEGENÜBER TROCKENSTRESS
UTILISATION D'ACIDE BÊTA-CYCLOCITRIQUE OU D'UN SEL DE CELUI-CI POUR AMÉLIORER LA TOLÉRANCE DES PLANTES AU STRESS HYDRIQUE

(30) Priority: 07.03.2017 EP 17305241
(43) Date of publication of application: 15.01.2020
(73) Proprietor: Commissariat à l'Énergie Atomique et aux Énergies Alternatives, 75015 Paris (FR)
(72) Inventor: HAVAUX, Michel, 13115 Saint Paul lès Durance (FR); D'ALESSANDRO, Stefano, 13115 Saint Paul lès Durance (FR)
(74) Representative: Cabinet Becker et Associés
(86) International application number: PCT/EP2018/055408
(87) International publication number: WO 2018/162449

(56) References cited:
- WO-A1-2010/011800
- WO-A2-2008/094590
- DE-A1- 102013 012 498
- TOMITA ET AL., ENVIRON. SCI. POLLUT. RES, vol. 23, 2016, pages 11998 - 12006, XP002769587
- J. HEATHER ET AL: "Synthesis of the Witchweed Seed Germination Stimulant (+)-Strigol", JOURNAL OF THE AMERICAN CHEMICAL SOCIETY, vol. 98, no. 12, 9 June 1976 (1976-06-09), pages 3661 - 3669, XP055367430
- T. MITSUI ET AL: "The growth promoting activity for plants of the substances which have carboxyl group(s) attached directly to the ring system. Studies on the plant hormones VI", NIPPON NOGEI KAGAKU KAISHI, 1 January 1952 (1952-01-01), pages 63 - 66, XP055367437

## Description

### Field of the invention

The invention relates to methods for promoting drought tolerance in plants.

### Background of the Invention

During their life cycle, plants may be at risk for exposure to environmental stresses such as high temperatures and limited access to water. As of today, drought is a global concern in the agricultural field. Drought periods may significantly impact crop yields by altering plant growth or causing plant death. According to the United Nations, drought intensity is increasing worldwide. Certain scientists are of the opinion that hydrological and agricultural droughts will be more and more frequent because of global warming, leading to a depletion of water resources and a significant decrease in agricultural yields.

Improving tolerance of plants to drought stress is also of high interest in floriculture. As of today, customers purchase more bedding plants from mass merchandisers and general retailers and less from traditional garden centers. Consequently, the shipping and retailing of bedding plants generally occur farther from their production site. During shipping and retailing, bedding plants may be exposed to high temperatures and irregular irrigation, which cause substrate drying and plant wilting. The unsalable drought-stressed plants can represent 15% of postproduction losses.

Several strategies have been explored to increase drought tolerance in plants such as chemicals, plant breeding and genetic engineering. Since the late 1990s, transgenic expression of "drought tolerance" genes has been pursued as a method for improving crop performance under drought. For example, Genuity^{®} DroughtGard^{™} Hybrid corn marketed by Monsanto is a genetically modified corn having increase yield under moderate drought.

Chemicals have been also investigated to increase drought resistance in plants. For instance, international application WO2008/094590 describes the use of abscisic acid (ABA) or its salt for increasing the drought tolerance of ornamental plants. Foliar application of growth modulators was shown to improve drought tolerance. Unfortunately, certain of these chemicals, such as abscisic acid and analogs thereof, reduce gas exchange by closing stomata, whereby photosynthesis and thus plant growth are slowed down. These chemicals are generally used for short-term treatment to improve plant tolerance to occasional environmental stresses. The long-term uses of said chemicals in field crops remain controversial, mostly because of their potential negative effects on plant growth. The use of osmo-protectants, such as proline, trehalose, fructan, or mannitol, has been also proposed. These compounds play adaptive roles in mediatic osmotic adjustment and in protecting subcellular structures in stressed plants. However, not all plants are able to accumulate these compounds.

Accordingly, there is a need for alternative methods to improve the tolerance of plants to drought stress.

### Summary of the Invention

The invention is as defined in the claims. The invention relates to the use of β-cyclocitric acid, or a salt thereof, for improving drought tolerance in a plant. β-cyclocitric acid or a salt thereof may be used for preventing, delaying or decreasing at least one effect of drought in the plant, said effect being selected from the group consisting of decrease in leaf expansion, leaf chlorosis, leaf scorches and necrosis, wilting, arrest or decrease in flowering, decrease in fruit or vegetable size, decrease in fruit or vegetable yield, decrease in plant size, accelerated senescence, premature plant death, premature flower drop, premature drop leaf drop, and decrease in seed production.

In a certain aspect, β-cyclocitric acid or a salt thereof is further used for improving the recovery of the plant after a drought stress, and/or for decreasing the water need in the plant.

β-cyclocitric acid or a salt thereof may be applied to the plant by spraying, spreading, fogging, dipping, drenching, dusting, by injection into the plant, or by injection into the plant substrate. In a particular aspect, β-cyclocitric acid or a salt thereof is applied to the plant by foliar spraying or by adding β-cyclocitric acid or a salt in irrigation water.

β-cyclocitric acid or a salt thereof may be applied to the plant prior to an event selected from the group consisting of meteorological drought, hydrological drought, irrigation withdrawal, the transplantation of the plant, the shipping of the plant and the retailing of the plant. One single application or multiple applications of β-cyclocitric acid or a salt thereof may be performed prior to said event.

β-cyclocitric acid or a salt thereof may be also used in a more regular manner. For instance, β-cyclocitric acid or a salt thereof may be applied to the plant at least once every three months, preferably at least once a month, for example at least once a week.

The plant treated with β-cyclocitric acid or a salt thereof may be of any type. In some embodiments, the plant is a potted plant such as a houseplant or a bedding plant. In some other embodiments, the plant is a crop plant growing in a field, a greenhouse or a covered field, and preferably selected from the group consisting of *Solanaceae, Apiaceae,* fruit trees, *Poaceae,* and *Brassicaceae.*

The invention also relates to the use of β-cyclocitric acid, or a salt thereof, for increasing the shelf-life of a cut plant, for instance cut flowers.

Another object of the invention is a phytopharmaceutical composition which comprises (i) β-cyclocitric acid or a salt thereof as an active ingredient and (ii) at least one phytopharmaceutically acceptable excipient. The phytopharmaceutical composition is for improving drought tolerance in a plant. The at least one phytopharmaceutically acceptable excipient is selected from pH modifiers, wetting agents and combinations thereof. The phytopharmaceutical composition may further comprise an additional active ingredient selected from phytohormones, herbicides, fungicides, pesticides, fertilizers, elicitors, plant growth regulators and combinations thereof.

In an additional aspect, the invention relates to a method for improving drought tolerance in a plant which comprises:
- providing a phytopharmaceutical composition comprising β-cyclocitric acid or a salt thereof, and at least one phytopharmaceutically acceptable excipient selected from pH modifiers, wetting agents and combinations thereof, and
- applying said phytopharmaceutical composition to the plant before, simultaneously or after exposure of the plant to a drought stress, said drought stress being selected from the group consisting of meteorological drought, hydrological drought, irrigation shortage or withdrawal, the transplantation of the plant, the shipping of the plant and the retailing of the plant.

### Figures:

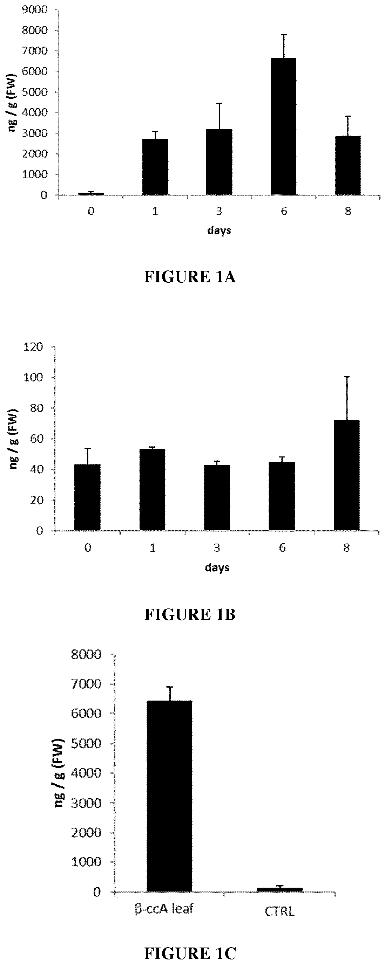

**Figure 1A** shows β-cyclocitric acid (β-ccA) level quantified by GC-MS (SIM m/z 153) in 5-week-old plants (*Arabidopsis thaliana*) watered with 25 ml of 1,5 mM β-ccA. **Figure 1B** shows β-cyclocitral (β-cc) level quantified by GC-MS (SIM m/z 137) in the same 5-week-old plants watered with 25 ml of water containing 1,5 mM β-ccA. **Figure 1C** shows β-cyclocitric acid (β-ccA) quantification by GC-MS (SIM m/z 153) in *Arabidopsis thaliana* leaves treated with 1.5 mM β-ccA for 24h (β-ccA leaf, 50 µl of β-ccA solution per leaf) and in leaves under control conditions (CTRL) (without treatment with β-ccA).

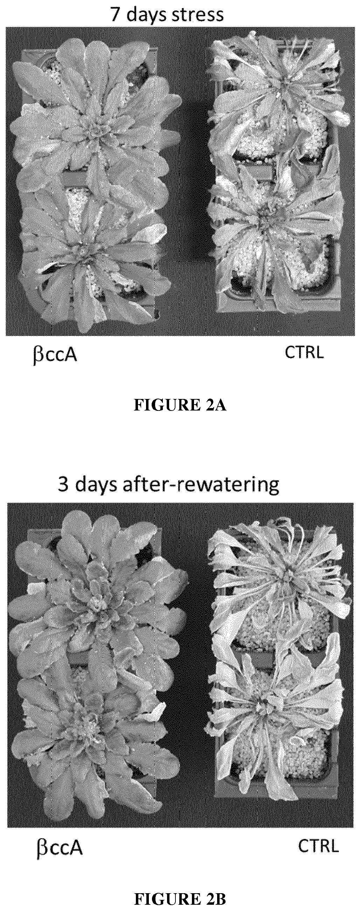

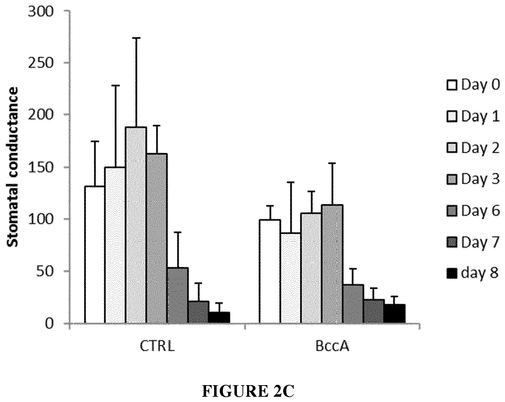

**Figure 2A** shows the picture of 5-week old plants pre-treated with 25ml of water containing1.5 mM β-ccA (BccA) or 25 ml of water (CTRL) and subjected to 7 days drought stress. **Figure 2B** shows the same plants 3 days after re-watering with water only. **Figure 2C** shows stomatal conductance of plants pre-treated with 25 ml β-ccA (BccA) or water (CTRL) and then subjected to drought stress conditions (0-8 days), mean of 6 leaves per point.

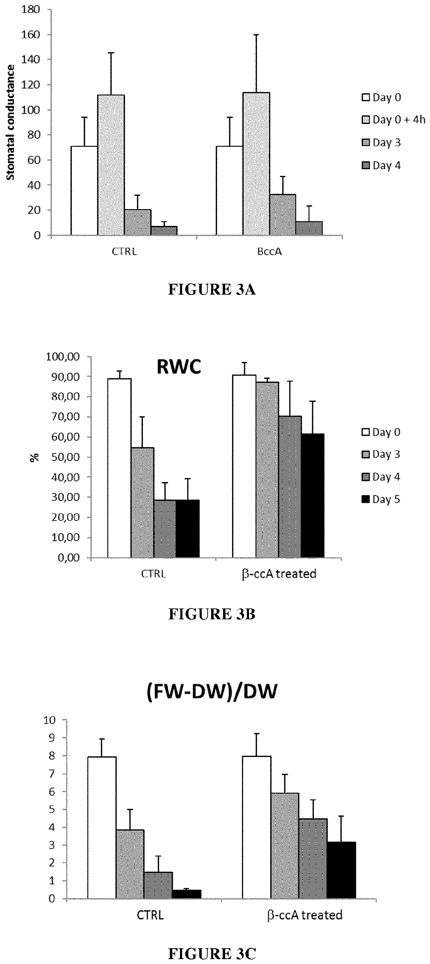

**Figure 3A** shows stomatal conductance in plants pre-treated with 25 ml of β-ccA 1.5 mM in water (β-ccA) per pot or 25 ml of water per pot (CTRL) and then subjected to drought stress (0-4 days). **Figure 3B** and **Figure 3C** show Relative water content (RWC) and water content on dry weight ratio (FW-DW)/DW, respectively, in the same plants (average of 6 leaves per point), at day 0, 3, 4 and 5 .

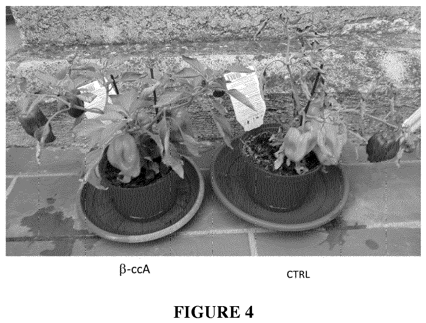

**Figure 4** shows the picture of pepper plants pre-treated with 500 ml of water containing 0.15 mM β-ccA per pot or 500ml of water per pot, after 4 days of drought stress, in environmental conditions (summer).

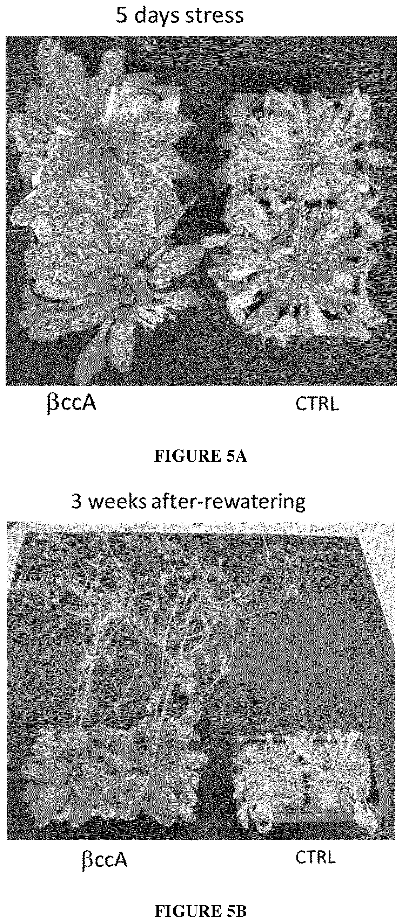

**Figure 5A** shows picture of 5-week old *ost2-2* plants (affected in stomatal closure) pre-treated with 25ml of 1.5 mM β-CCA or with water (CTRL) and then subjected to 5 days drought stress.
**Figure 5B** shows the picture of the same plants 3 weeks after re-watering with water.

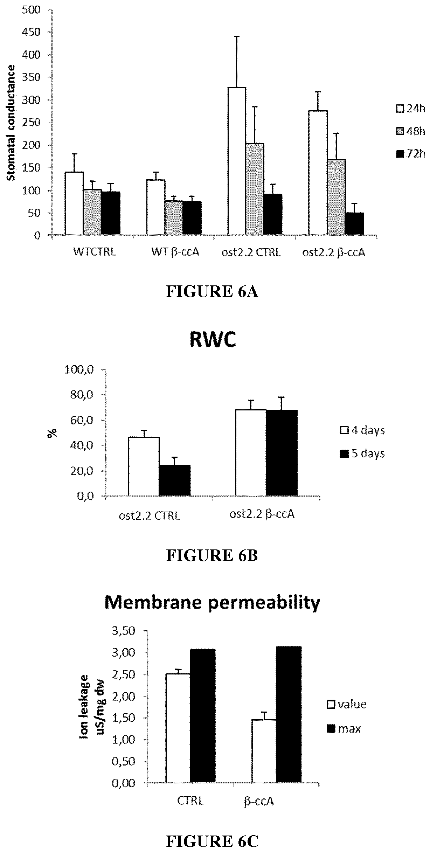

**Figure 6A** shows the stomatal conductance in wildtype plants (WT) or in *ost2-2* plants pre-treated with 25 ml of 1.5 mM β-CCA (WT β-ccA, ost2.2 β-ccA) or with water (WT CTRL, ost2.2 CTRL) and then subjected to stress conditions (0-3 days), mean of 6 leaves per point.
**Figure 6B** shows the relative water content (RWC) in *ost2-2* plants pre-treated with 25 ml of 1.5 mM β-CCA (ost2.2 β-ccA) or with 25 ml of water (ost2.2 CTRL) at 4 and 5 days of drought stress (average of 6 leaves per point). **Figure 6C** shows ion leakage in *ost2-2* plants pre-treated with β-ccA or with water, at 5 days of drought stress (6 leaves per condition).

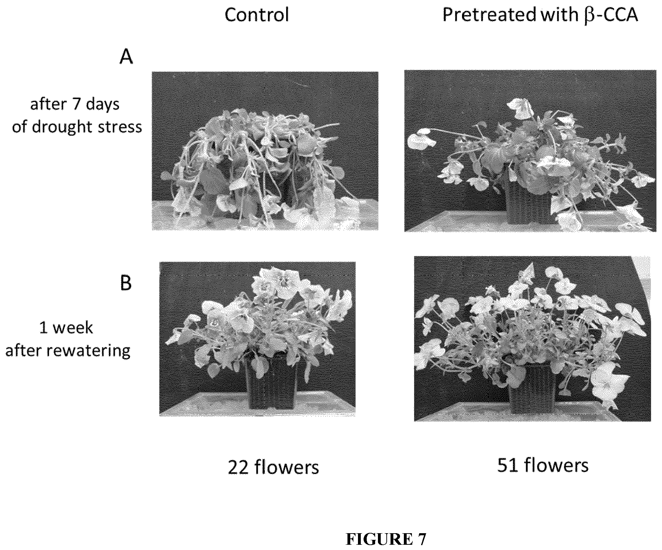

**Figure 7** shows the picture of pansy plants pre-treated with 300 ml of water per pot (control) or pretreated with 300 ml of water containing 0.15 mM β-ccA per pot (pre-treatment with β-ccA), after being subjected to 7 days of drought stress (A) and after re-watering (one week) (B). One week after re-watering, the pansy plants pre-treated with β-ccA showed 47± 6 flowers on average, while the control plants showed 23±1 flowers only.

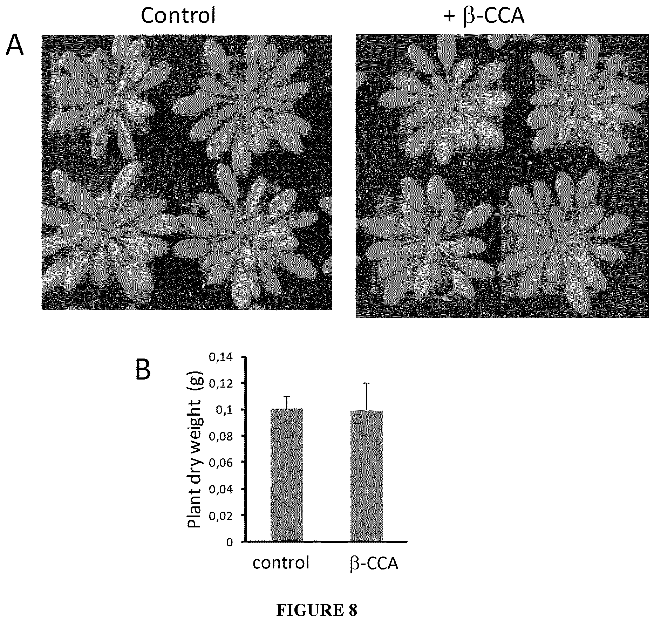

**Figure 8** shows that long-term exposure of Arabidopsis plants to β-CCA had no effect on the growth rate under normal conditions. Figure 8A) picture of the plants and Figure 8B) shoot dry weight at the end of the experiment.

### Detailed description of the Invention

β-cyclocitric acid, also called herein β-ccA or β-CCA, corresponds to the compound of formula (I):

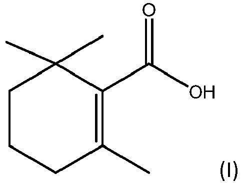

Its chemical name is 2,2,6-trimethylcyclohexene-1-carboxylic acid. The β-cyclocitric acid is also called β-cyclogeranic acid.

The Inventors showed that treatment with β-cyclocitric acid increases the tolerance of plants to environmental stress, in particular to drought conditions.

More precisely, the Inventors showed that β-cyclocitric acid was taken-up and accumulated in leaves when applied to the plants by foliar spraying or when added in water irrigation. Treatment of *Arabidopsis thaliana* plants with β-cyclocitric acid before exposure to drought stress was shown to prevent drought symptoms in plants such as wilting. After re-watering, pre-treated plants recovered and were fully turgescent while control plants, which had not been treated with β-CCA, died. β-CCA promoted drought tolerance in the model plant *Arabidopsis thaliana,* but also in other plant species of agricultural interest such as pepper, tomato plants and flowering plants e.g. pansy plants.

Moreover, the Inventors showed that pre-treatment with β-CCA prevented water losses, during drought stress, in wild-type *Arabidopsis thaliana* but also in a *Arabidopsis* mutant in which stomata response to abscisic acid is abolished, namely ost2-2 mutant. The Inventors further showed that treatment of wild-type plants with β-CCA before drought stress did not decrease stomatal conductance and thus did not induce stomatal closure in wild-type *Arabidopsis* plants. Such results, together with the ability of β-CCA to increase drought resistance in ost2-2 mutant, strongly suggest that the mechanism of action of β-CCA does not merely rely on stomatal closure, as previously shown for compounds such as abscisic acid. Because β-CCA does not significantly promote stomatal closure, β-CCA is not likely to affect gas exchange and photosynthesis in plants and thus to slow down plant growth.

Accordingly, β-cyclocitric acid or a salt thereof can be used as a phytopharmaceutical active agent, preferably as an agent for improving plant tolerance to environmental stresses.

In a particular aspect of the invention, β-cyclocitric acid or a salt thereof is used to improve drought stress tolerance in a plant. In a certain aspect, the Invention relates to the use of β-cyclocitric acid or a salt thereof for preventing drought effects in a plant. For instance, the Invention also relates to the use of β-cyclocitric acid, or a salt thereof to prevent water losses in a plant, especially when the plant is subjected to drought stress. The Invention also relates to the use of β-cyclocitric acid or a salt thereof for preventing or delaying leaf scorches and/or wilting in a plant. A further object of the invention is the use of β-cyclocitric acid, or a salt thereof, to reduce water need in a plant. In a further aspect, the Invention relates to the use of β-cyclocitric acid or a salt thereof to improve tolerance of a plant to transplant shock. In another aspect, the invention relates to the use of β-cyclocitric acid or a salt thereof to improve plant recovery after drought stress or transplant shock. A further aspect of the invention is the use of β-cyclocitric acid or a salt thereof to increase the shelf-life of a plant. In a particular aspect, the Invention relates to the use of β-cyclocitric acid or a salt thereof to increase the shelf-life a cut plant, for instance cut flowers, e.g. in the form of a bouquet.

As mentioned above, β-cyclocitric acid refers to the compound of formula (I) as shown above. β-cyclocitric acid can be easily prepared by oxidation from β-cyclocitral. β-cyclocitral is a commercial product typically used as flavor additive in food. For instance, β-cyclocitral can be oxidized into β-cyclocitric acid in water and used as such. β-cyclocitric acid can also be prepared by oxidation of β-cyclocitral optionally in the presence of Ag₂O, and then isolated by extraction with diethyl ether, and recrystallization in benzene/cyclohexane, as described in Tomita et al., (Environ. Sci. Pollut. Res, 2016, 23:11998-12006).

As used herein, *"a salt of β-cyclocitric acid"* refers to any salt of β-cyclocitric acid acceptable for phytopharmaceutical use.

It goes without saying that in such a salt, β-cyclocitric acid is present as a carboxylate, namely as β-cyclocitrate. Appropriate salts according to the invention encompass, without being limited to, sodium, potassium, magnesium, calcium, ammonium, and salts of ethanolamine, triethanolamine and dimethylethanolamine. Preferred salts are sodium β-cyclocitrate, potassium β-cyclocitrate, and ammonium β-cyclocitrate and combinations thereof.

As used herein, *"drought stress"* refers to conditions wherein the plant is exposed to a water shortage, which means that the daily water supply provided to the plant, or taken up by the plant, is lower than the minimal daily water amount needed by the plant. The *"drought stress"* may be due to environmental causes such as meteorological drought e.g. precipitation shortages or prolonged dry period, and hydrological drought e.g. soil water deficit or reduced ground water level. Alternatively, the *"drought stress"* may be caused by irregular watering which may occur during events such as shipment and retailing of the plant. In certain embodiments, drought stress may be combined with high temperature, in particular temperature higher than 30°C. In other aspect, the *"drought stress"* may result from transplantation and thus relates to transplant shock. As used herein, *"transplantation of a plant"* refers to the action of moving a plant from one location and replanting it in another location. Transplantation may cause damage to the root hairs of the plant due to uprooting or drying out. Consequently, the water absorption of the plant can be altered after transplantation. Moreover, the plant may be subjected to an insufficient water supply during transplantation.

*"Drought stress"* can cause several negative effects in plants. Such effects (also called hereafter damages or symptoms) encompass, without being limited to, decrease in leaf expansion, leaf chlorosis, leaf scorches and necrosis, wilting, impairment in plant development e.g. arrest or decrease in flowering, decrease in fruit or vegetable size, decrease in fruit or vegetable yield, decrease in plant size, accelerated senescence, premature plant death, premature flower drop, premature drop leaf drop, and decrease in seed production.

As used herein, a compound is able to *"improve the tolerance or the resistance of a plant to drought"* means that the treatment of the plant with the compound promotes the resistance of the plant to drought stress, namely may prevent, decrease or delay one or several effects caused or resulting from exposure to drought stress in the plant such as wilting, as compared to a control plant which has not been treated with the compound. In some embodiments, the compound may increase the shelf-life of the plant in drought stress, as compared to a control plant exposed to the same drought stress. In another embodiment, the compound may promote the recovery of the plant after the drought stress, as compared to a control plant which has not been treated with the compound. In other embodiments, a compound which is able to *"improve the tolerance or the resistance of a plant to drought"* may reduce the water needs in the plant, whereby less frequent irrigation may be performed to maintain the plant alive.

The plant which can be treated with β-cyclocitric acid or a salt thereof can be of any type. The plant can belong to herbaceous plants or woody plants. In some embodiments, the plant is a crop plant. For instance, the plant can be selected from the group consisting of *Solanaceae, Apiaceae,* fruit trees, *Poaceae,* and *Brassicaceae.*

The plant to treat can be a cereal plant such as corn, wheat, rice, barley, sorghum, millet, oats, buckwheat, quinoa or triticale. Alternatively, the plant can be selected from *Gossypium* genus, i.e. a cotton species or from *Nicotiana* (tobacco) species. Crop plants also encompass oily-bearing crops such as sunflower, rapeseed, soybean, or linseed.

The plant to treat can be also a vegetable such as curcurbit, brassica, fruiting or leafy vegetables. As example of cucurbit vegetables, on can cite zucchini, cucumber, melon and watermelon. Brassica vegetables encompass, without being limited to cabbage, broccoli, cauliflower, kale and mustard. Examples of fruiting vegetables are, for instance, tomato, pepper, avocado, pea, bean or eggplant. Leafy vegetables encompass spinach, beet green, lettuce and the like.

Alternatively, the plant can be an ornamental plant such as houseplants, and ornamental flowering plants. For instance, the ornamental plant may be selected from *Asteraceae, Orchidaceae, Rosacae, Geraniaceae,* and *Violaceae.* Example of flowering ornamental plants encompass, without being limited to, geraniums, marigolds, roses, pansies, orchids, and petunias.

β-cyclocitric acid or a salt thereof can be used to treat plants in various types of situation and environment, so as to increase their tolerance to environment stresses, in particular to drought stress. The plant can be a potted plant, such as a houseplant or a bedding plant. Alternatively, the plant can be in the ground, for instance growing in a field, a garden or a vegetable garden. The plant can be of any stage of development, such as in the vegetative stage, the reproductive stage or the ripening stage. For instance, the plant may be a seedling, a plug plant, a shoot or a plant in flowering stage.

The plant may be a wild type plant, e.g. a non-genetically modified plant, or a genetically modified plant.

β-cyclocitric acid or a salt thereof can be applied to the plant by any conventional way such as spraying, spreading, fogging, dipping, drenching, dusting or by irrigation, e.g. sprinkler irrigation or drip irrigation, chemigating (i.e. by addition to the irrigation water), injection into the plant, or by injection into the soil or plant substrate. β-cyclocitric acid or a salt thereof may be applied to the whole plant or contacted with one or more parts of the plant such as roots, or leaves. Alternatively, β-cyclocitric acid can directly or indirectly be produced in planta or derived from a precursor or substance applied to the plant by any of the conventional way cited hereabove.

For instance, β-cyclocitric acid may be directly dissolved in plain water, which can be then applied by spraying, e.g. foliar spraying, or watering. The frequency and the duration of the treatment with β-cyclocitric acid or a salt thereof as well as the amount of the active agent to apply to the plant may vary depending on the plant species to treat, the plant situation, the environmental conditions such as the local climate, and/or the drought stress which is expected. β-cyclocitric acid or a salt thereof may be applied to the plant prior to an expected drought stress, for instance prior to an event such as meteorological drought, hydrological drought, irrigation shortage or withdrawal, the transplantation of the plant, the shipping of the plant and the retailing of the plant.

β-cyclocitric acid or a salt may be applied one time or several times to the plant. Alternatively, β-cyclocitric acid or a salt thereof may be regularly applied to the plant.

The treatment with β-cyclocitric acid or a salt thereof can last several days, several weeks or several months depending on the plant to treat. The frequency of applications may be at least once a month, at least once a week, at least every three days and even daily. In other embodiments, the treatment of the plant with β-cyclocitric acid or a salt thereof may comprise one single application of the compound only, preferably within few days prior to, or just before, an expected drought stress.

In a certain aspect of the invention, β-cyclocitric acid or a salt thereof is used in order to improve drought tolerance in a crop. The crop can be in a greenhouse, a covered field or a field. In some embodiments, the plant is a field crop, such as maize, wheat, cotton, sunflower, canola, bean or tobacco.

β-cyclocitric acid or a salt thereof can be administered "as an acute treatment", for instance when a drought period is expected. As an example, β-cyclocitric acid or a salt thereof can be applied prior to an expected drought period, or during periods with a high risk of drought, for instance before and/or during summer. For illustration only, β-cyclocitric acid or a salt thereof may be applied at least one day before, for instance at least 2, 3, 4, 5, 6, 7, 8, 9, 10, 12, 13, 14 days before the beginning of an expected drought period. One single application of β-cyclocitric acid or a salt thereof to the crop may be performed prior to the expected drought or during the period of high risk of drought. Alternatively, multiple applications may be performed, for instance at least 2, 3, 4, 5, 6, 7, 8, 9, 10, 11, 12, 13, or 14 applications to the crop may be performed. The number of applications may be for instance at least once every two weeks, at least once a week, at least once every three days, once every two days or once a day. For illustration only, β-cyclocitric acid or a salt thereof may be applied to the crop daily, during a period of at least 4 days prior to the expected drought period.

In some embodiments, the application of β-cyclocitric acid or a salt thereof can be continued during the drought period, with the same or a different frequency.

Alternatively, β-cyclocitric acid or a salt thereof can be applied to the field crop as a prophylactic treatment, in a regular manner. For instance, the crop may be treated with β-cyclocitric acid or a salt thereof at least once every 3 months, at least once every 2 months, and even at least 1, 2, 3, 4, 5, 6, 7, 8, 9, or 10 times a month.

β-cyclocitric acid or a salt thereof may be applied to the crop plants during the vegetative growth stage and/or the reproductive stage of the crop. For instance, β-cyclocitric acid or a salt thereof may be suitable for application to the crop from the beginning of the vegetative stage to the harvest. The application of β-cyclocitric acid can be also performed after the harvest, e.g. for vegetable crops. As an example, the application of β-cyclocitric acid to field seeded crops can began just after emergence. Such a treatment may aim at enhancing drought tolerance and also reduce water needs in the crop. As another example, β-cyclocitric acid or a salt thereof may be applied to the crop with water irrigation, namely every time the crop is irrigated. As a further example, β-cyclocitric acid or a salt may be applied to the plant once a month, every two weeks or once a week.

The amount of β-cyclocitric acid or a salt thereof to apply to the crop by hectare may vary depending on the crop species and the aim which is sought. For instance, the amount of β-cyclocitric acid or a salt thereof applied by hectare may be higher when used as an acute treatment to protect the crop against an expected drought period, than when used as a prophylactic treatment as described above.

The amount of β-cyclocitric acid or a salt thereof applied per application may vary from 1 g to 100 kg per hectare, for instance from 5 g to 50 kg per hectare, from 10 g to 1 kg per hectare, from 100 g to 1000 g per hectare or from 10 g to 500 g per hectare. β-cyclocitric acid or a salt thereof may be applied to the crop by any conventional mean, for instance by spreading, spraying or irrigating.

In another aspect, β-cyclocitric acid or a salt is applied to a plant to improve its resistance to transplantation and/or to prevent the effects of transplant shock in the plant. Typically, β-cyclocitric acid or a salt may be applied to the plant prior to transplantation, for e.g. at least 6 hours, 12 hours, or 18 hours, or at least 1, 2, 3, 4, 5, 6, 7, 8, 9, 10, 12, 13, or 14 days prior to transplantation. In certain embodiments, one single application of β-cyclocitric acid or a salt is performed prior to transplantation, e.g. at least 6 hours, 12 hours, 18 hours, 24 hours, 48 hours, 72 hours or 96 hours before transplantation. In other embodiments, multiple applications may be performed. For instance, β-cyclocitric acid or a salt thereof may be applied every three days, every two days and even once a day until transplantation. As an example, the plant can be treated with β-cyclocitric acid or a salt thereof daily, during 2 to 6 days, prior to its transplantation.

In some embodiments, β-cyclocitric acid or a salt thereof is further applied to the plant after transplantation, once or several times.

As an example, β-cyclocitric acid or a salt thereof may be administered to the plant once within 96 hours after transplantation or over several days or several weeks (e.g. 1, 2, 3, or 4), e.g. at least once a week, twice a week or daily, after transplantation.

In a further aspect, β-cyclocitric acid or a salt thereof is used to improve drought tolerance of potted plants such as bedding plants and ornamental potted plants e.g. houseplants.

In particular, β-cyclocitric acid or a salt thereof can be used to improve the tolerance of said plants to a drought stress caused by infrequent watering. Indeed, potted plants such as ornamental potted plants and bedding plants can be subjected to irregular watering, and even high temperatures, especially during shipment from their production site to their sale site, and/or during their marketing. Accordingly, β-cyclocitric acid or a salt thereof may be applied to the plant to improve the tolerance of potted plants to drought stress e.g. occurring during shipping and/or retailing. β-cyclocitric acid or a salt thereof may be applied just before the expected drought stress, e.g. when the plant is still in the plant nursery. The plant can be treated with β-cyclocitric acid or a salt thereof at least 6 hours, 12 hours, 18 hours, 24 hours and even at least 48 hours prior to shipping. The treatment with β-cyclocitric acid or a salt thereof can be repeated several times prior to shipping or marketing. For instance, the plant may be treated daily with β-cyclocitric acid or a salt thereof during a period of several days prior to shipping and/or marketing, e.g. during a period from 2 days to 8 days, such as 3, 4, or 5 days prior to shipping. The treatment of the plant with β-cyclocitric acid or a salt thereof can be optionally repeated during shipping and/or marketing, in particular with less frequent applications.

Alternatively, β-cyclocitric acid or a salt thereof may be administered to the potted plant, in particular to an ornamental potted plant, in a more regular manner. For instance, β-cyclocitric acid or a salt thereof is applied to the plant every two month, once a month or once a week. Such a treatment increases drought tolerance of the plant and may also decrease the water need of the plant and/or increase the shelf-life of the plant.

The application of β-cyclocitric acid or a salt to potted plants may be performed by any conventional way, e.g. foliar spraying, by plant drenching, and/or by watering the plant substrate. For illustration only, the plant may be treated with an aqueous solution comprising β-cyclocitric acid or a salt thereof by foliar spraying. In another embodiment, β-cyclocitric acid thereof or a salt thereof may be added to the plant substrate, for instance by watering or by mixing the plant substrate with a composition containing β-cyclocitric acid.

In another aspect, β-cyclocitric acid or a salt thereof can be used to increase the drought tolerance and/or the shelf-life of bunches and other cut plants, for instance cut flowers. For instance, β-cyclocitric acid or a salt thereof can be directly applied to the plant before cutting. In an alternate or additional embodiment, β-cyclocitric acid or a salt can be applied to the cut plant or the bunch. Typically, β-cyclocitric acid may be applied to the cut plant by spraying or dipping. β-cyclocitric acid or a salt thereof may be also added in a substrate in which the cut plant is picked or on which the cut plant is disposed. Alternatively, β-cyclocitric acid may be present in an aqueous solution wherein the cut stem of the plant is plunged.

In all the uses according to the Invention, β-cyclocitric acid or a salt may be applied as a liquid composition, preferably as an aqueous composition, to the plant, (e.g. to the crop, the potted plant, the plant to be transplanted or the cut plant). The liquid composition may comprise from 0.001 mM to 100 mM, for instance from 0.01 mM to 50 mM or from 0.05 mM to 10 mM, such as from 0.1 mM to 5.0 mM, of β-cyclocitric acid or a salt thereof. The pH of the aqueous composition may be from 3 to 9.

As mentioned above, β-cyclocitric acid or salt thereof may be dissolved or dispersed in water which is then applied to the plant by spraying or by watering. Alternatively, β-cyclocitric acid may be formulated into a phytopharmaceutical composition, before treatment of the plant. Accordingly, in an additional aspect, the present invention relates to a phytopharmaceutical composition comprising β-cyclocitric acid or a salt thereof. It goes without saying that β-cyclocitric acid or a salt thereof is present as an active ingredient, preferably as an active agent to improve drought tolerance in a plant.

Preferably, the phytopharmaceutical composition is suitable to provide at least one of the following effect in a plant:
- improving drought tolerance in a plant,
- preventing one or several effects of drought in a plant,
- improving shelf-life of a plant, in particular a cut plant,
- improving tolerance to transplant shock in a plant, and/or
- promoting recovery of a plant exposed to drought stress and/or transplant shock.

The phytopharmaceutical composition may be of any type. The phytopharmaceutical composition may be, without being limited to, an aqueous or a hydro-alcoholic composition, a paste, a gel, in particular a hydrogel, a glue, an emulsion, for instance a water-in-oil emulsion, an oil-in-water emulsion, a micro-emulsion, a multiple emulsion, a liquid dispersion, a colloidal dispersion, a powder, in particular a dustable powder, a granule, a granulate, a water-dispersible tablet, a water soluble powder, and an aerosol.

The phytopharmaceutical composition may be a ready-to-use composition, namely a composition which can be directly applied to the plants, for instance with a spraying or a dusting device. Alternatively, the phytopharmaceutical composition may be a concentrated composition, namely a composition which has to be diluted, dispersed or dissolved in an appropriate solvent, e.g. in an aqueous solution, before application to the crop. For illustrative purpose only, the phytopharmaceutical composition of the invention is in the form of a powder or a tablet which is dissolved or dispersed in water before foliar spraying. As a further example, the phytopharmaceutical composition of the invention is a liquid concentrate which is diluted in water, for instance to a concentration from 1% to 20% v/v before application to the plant. The phytopharmaceutical composition can comprise one or several excipients. Typically, the phytopharmaceutical composition can comprise from 0.001% to 95%, preferably from 0.01% to 50% by weight of β-cyclocitric acid or a salt thereof and from 5% to 99.999% by weight, preferably from 50% to 99.99% by weight of one or several excipients, as compared to the total weight of the phytopharmaceutical composition. It goes without saying that the one or several excipients are preferably selected from phytopharmaceutical excipients. As used herein "a phytopharmaceutical excipient" refers to an excipient which does not exhibit a significant toxicity with respect to the environment (namely the flora and the fauna) and the human beings, at its typical dosages of use.

Phytopharmaceutical excipients are well-known by the skilled person, and encompass without being limited to, carriers, in particular solvents such as water and lower alcohol, mineral oils or vegetal oils, diluents, surfactants, in particular cationic, amphoteric or nonionic surfactants, wetting agents, emulsifiers, foaming agents, anti-foaming agents, dispersants, thickeners, adhesives, gelling agents, encapsulating agents, conservatives, stabilizers, pigments, waxes, latex, gum, pH modifiers and combinations thereof.

The phytopharmaceutical composition of the Invention comprises (i) β-cyclocitric acid or a salt thereof as active ingredient and (ii) at least one excipient selected from pH modifiers, wetting agents and combinations thereof.

It is also described a phytopharmaceutical composition comprises at least one excipient selected from a surfactant, a thickener and a carrier.

According to the invention the term "carrier" is to be understood as meaning a natural or synthetic, organic or inorganic substance which is mixed or combined with the active agent for better applicability to plants. The carrier may be solid or liquid, is generally inert and should be suitable for use in agriculture. Suitable solid or liquid carriers include, for example, ammonium salts and natural ground minerals, such as kaolins, clays, talc, quartz, attapulgite, montmorillonite or diatomaceous earth, and ground synthetic minerals, such as finely divided silica, alumina and natural or synthetic silicates, resins, waxes, solid fertilizers, water, alcohols, especially butanol, organic solvents, mineral oils and vegetable oils, and also derivatives thereof. It is also possible to use mixtures of such carriers. The carrier may account for 40% to 99.999% by weight of the total weight of the composition.

The surfactant may be an emulsifying agent, a dispersing agent or a wetting agent. The surfactant may be cationic, anionic, amphoteric or non-ionic. As examples of surfactants, one may cite fatty acids, phospholipids such as lecithins, ethoxylated sorbitan esterified with fatty acids such as polysorbates, e.g. polyoxyethylene (20) sorbitan monolaurate or polyoxyethylene (20) sorbitan monopalmitate, polyacrylic acid salts, lignosulphonic acid salts, phenolsulphonic or naphthalenesulphonic acid salts, polycondensates of ethylene oxide with fatty alcohols or with fatty acids or with fatty amines, substituted phenols (in particular alkylphenols or arylphenols), salts of sulphosuccinic acid esters, taurine derivatives (in particular alkyl taurates), phosphoric esters of polyoxyethylated alcohols or phenols, fatty acid esters of polyols, and derivatives of the above compounds containing sulphate, sulphonate and phosphate functions. Surfactant may account for 0.05% to 40 % by weight of the composition.

Thickening agents include, without being limited to, alumina hydrate, magnesium hydroxide, bentonite clays and colloidal silica, starches e.g corn starch, vegetable gums, for example arabic gum, xanthan gum and tragacanth gum, starch derivatives, alginates, carragenates, cellulose ethers such as methyl cellulose, methyl hydroxyethyl cellulose, hydroxyethyl cellulose and hydroxypropyl methylcelluloses, polyvinyl alcohol, polyacrylic acid and mixtures thereof. The thickening agent may account for 0.05% to 50% by weight of the composition.

It is also described a phytopharmaceutical composition comprising at least one surfactant and/or at least one carrier. For instance, the phytoparmaceutical composition may comprise:
- from 0.001% to 50% of β-cyclocitric acid or a salt thereof,
- from 50% to 99,999% of a carrier, and
- optionally from 0.05% to 20% of a surfactant,
the percentages being expressed by weight as compared to the total weight of the phytopharmaceutical composition.

In some embodiments, β-cyclocitric acid or a salt thereof is the sole active agent present in the phytopharmaceutical composition. In some other embodiments, β-cyclocitric acid or a salt thereof is used in combination with at least one additional phytopharmaceutical active ingredient. Accordingly, the phytopharmaceutical composition may thus comprise at least one additional phytopharmaceutical active ingredient. Said additional active ingredients may be selected among phytohormones, herbicides, fungicides, pesticides, fertilizers, elicitors, plant growth regulators and combinations thereof. The additional active ingredient may account for 0.01% to 20% by weight of the phytopharmaceutical composition.

In some particular embodiments, the phytopharmaceutical composition is devoid of any plant growth regulators.

The phytopharmaceutical composition of the invention may be prepared by any conventional method. Typically, β-cyclocitric acid or a salt thereof is mixed with one or several excipients and optionally with the additional active ingredient, so as to obtain the phytopharmaceutical composition.

The Invention also relates to a method for treating a plant, which comprises applying β-cyclocitric acid or a salt thereof to the plant. The method of the invention is for improving drought tolerance in a plant.

It is also described a method for
- preventing one or several effects of drought in plants,
- improving shelf-life of a plant, in particular a cut plant, harvested fruits or vegetables,
- improving tolerance to transplant shock in a plant, and/or
- promoting recovery of a plant exposed to drought stress and/or transplant shock.

β-cyclocitric acid or a salt thereof is applied in an effective amount to the plant. An effective amount relates to an amount enabling to achieve one or several above aspects, for instance the improvement of drought tolerance in the plant. As mentioned above, the "effective amount" to apply, the number of applications and the duration of the treatment may vary depending on the plant to treat, the expected drought stress, the situation of the plant, the environmental conditions and the effect to achieve.

The methods of the invention can be implemented as fully-detailed above for the uses of the invention. For instance, β-cyclocitric acid or a salt thereof can be applied to the plant by any conventional means such as spraying, drenching, dipping, or frogging, or added in irrigation water.

It is described that β-cyclocitric acid or a salt thereof can be dissolved in water and then applied by watering or spraying to the plant.

According to the invention, β-cyclocitric acid or a salt thereof is formulated in a phytopharmaceutical composition which is applied to the plant, optionally after dilution, dissolution or suspension in an appropriate solvent such as water. β-cyclocitric acid or a salt thereof may be applied one time or more than one time to the plant, as described above.

The method of the invention comprises the steps of:
- providing a phytopharmaceutical composition comprising β-cyclocitric acid or a salt thereof and at least one phytopharmaceutically acceptable excipient selected from pH modifiers, wetting agents and combinations thereof, as described above, and
- applying said phytopharmaceutical composition to the plant.

The method further comprises a step of contacting the plant with a drought stress. This step is performed before, simultaneously or after administering β-cyclocitric acid or a salt thereof to the plant. The drought stress may be any one as defined hereabove.

Further aspects and advantages of the present invention are disclosed in the following experimental section, which should be regarded as illustrative and not limiting the scope of the present application.

### Examples

### Example 1

### 1. Material and method

### • GC/MS measurements

GC/MS measurements of β-cyclocitral and β-cyclocitric acid were performed as described previously (Ramel et al., 2012, Proceedings National Academy of Sciences USA 109, 5535-5540). The lipid fraction was extracted from the samples (about 500 mg plant tissues) in 4 ml tert-Butyl methyl ether (TBME) plus 1 ml 1mM HCl, containing 4-nonanol as internal reference (10 µg). After centrifugation, supernatant was collected, evaporated and analyzed by GC-MS. β-cyclocitral and β -cyclocitric acid were quantified on the most probable ion (m/z 137 and 153 respectively) in SIM analyses.

### • Plant growth and stress treatment

Wild type (WT, ecotype Col 0) and ost2-2 mutant *Arabidopsis thaliana* lines were grown for 5 weeks in short-day conditions (8h/16h, day/night) under a moderate photon flux density (PFD) of ~150 µmοl photons m⁻² s⁻¹, controlled temperature (20 °C/18 °C, day/night) and a relative air humidity of 65 %. Drought stress was applied by stopping watering after the treatment with 25 ml of water or with 25 ml of water containing 1.5mM β-ccA per pot.

Pepper plants were bought and acclimated to the summer environment for 1 week. Drought stress was applied by stopping watering after the treatment with 500 ml water or of 500 ml of water containing 0.15 mM β-ccA per pot.

A similar experience was performed with tomato plants.

Pansy plants (*Viola tricolor*) were bought on the local market and acclimated to the greenhouse environment for 1 week. Drought stress was applied by stopping watering after pre-treatment with 300 ml of water (control) or 300 ml of water containing 0.15 mM β-CCA per pot (plant pretreated with β-ccA). After 7 days of water withdrawal, the plants were re-watered.

Pictures of the plants were taken 7 days after stopping watering (Figure 7A) and after one week of re-watering (Figure 7B). The number of flowers for each plant was counted.

### • Stomatal conductance measurements

Stomatal conductance was analyzed during drought stress on at least two leaves per plants on six plants per condition, using an AP4 diffusive porometer (Delta-T Devices, Cambridge, UK). Two readings were taken per leaves and averaged. Measurements were made between 1 and 2 hours after illumination, on the abaxial leaf surface.

### • Relative water content (RWC)

6 leaf disks per conditions were cut from leaves of treated or untreated plants and weighted (FW). For measuring the turgid weight (TW), samples were submerged with bi-distilled water and left at 4°C for 16 hours. Dry weight (DW) was measured after 16h at 70°C in a ventilated oven. RWC was measured following the formula (TW-FW)/(TW-DW).

### • Ion Leakage

6 leaves per condition were cut from treated or untreated plants and weighted (FW), and placed in 25 ml of bi-distilled water. Conductivity of the solution was measured after 2 h of mild agitation and after boiling the samples using a DIST-5 Hanna conductimeter. The values were normalized on the FW (value) and the values after boiling are reported as max.

### 2. Results

β-CCA is soluble in water. Addition of β-CCA to the irrigation water led to a significant β-CCA accumulation in leaves of *Arabidopsis thalania* plants over time (Figure 1A). No significant increase in β-cyclocitral level was observed in leaves of *Arabidopsis thalania* plants watered with β-CCA solution (Figure 1B). Such result indicates that exogenously applied β-CCA was taken up by roots, and transported to the leaves. The Inventors also showed that β-CCA can enter leaf tissues and accumulate when applied directly on the leaves (Figure 1C). Thus, whether applied through roots or directly on leaves, β-CCA accumulated in the leaves without any change in the β-cyclocitral content.

Following irrigation of *Arabidopsis* plants with water containing β-CCA (β-CCA group) or with water devoid of β-CCA at the same pH (control group), water stress was induced by withdrawing irrigation. After 7 days of water withdrawal, control plants showed clear symptoms of stress and dehydration (Figure 2A). These symptoms were strongly attenuated in plants pretreated with β-CCA (Figure 2A). After drought stress period, plants were then re-watered with plain water (without β-CCA). Control plants did not recovered and died. In contrast, plants which had been pre-treated with β-CCA before the drought stress recovered and were fully turgescent (Figure 2B). The pretreatment with β-CCA also increased drought resistance in other plant species such as pepper (Figure 4). A similar result was obtained for tomato plants (data not shown). β-CCA was also effective to protect flowering plants against drought stress. As illustrated in Figure 7, pansy plants pre-treated with β-CCA showed less drought symptoms than non-treated plants after one week of water withdrawal (Figure 7A). Moreover the pansy plant pre-treated with β-CCA had a better recovery after re-watering and showed significantly more flowers than the control plant (on average, 47±6 flowers *versus* 23±1 flowers)

The Inventors showed that the protective role of β-CCA against drought stress did not merely rely on stomata closure. Stomata closure before drought stress was not induced by treatment with β-CCA. Figure 2C and Figure 3A showed that there was no significant difference in stomatal conductance between control plants and plants treated with β-CCA at day 0 (namely just before the drought stress). Moreover, closure of stomata during drought stress was similar in β-CCA-treated and control plants (Figures 2C, 3A). Noteworthy, the water content in plants pre-treated with β-CCA was significantly higher than in control plants, which showed that β-CCA enables to prevent water loss in plants during drought stress (Figure 3C).

Importantly, the protective effect of β-CCA against drought stress was also observed in the *ost2-2* Arabidopsis mutant (Figure 5A). In *ost2-2 Arabidopsis* mutant, the stomatal response to abscisic acid (ABA) is altered and the stomata are maintained open (Merlot et al. 2007, EMBO J. 26, 3216). As expected, transpiration rate is strongly increased in *ost2-2* compared to the wild type (Figure 6A), making this mutant very sensitive to drought stress. Pre-treatment of *ost2-2 Arabidopsis* mutant with β-CCA significantly increased their resistance to drought stress, as compared to control *ost2-2 Arabidopsis* mutant which were treated with water devoid of β-CCA (Figure 5A). The *ost2-2 Arabidopsis* mutant pre-treated with β-CCA fully recovered after watered and became turgescent, while control *ost2-2 Arabidopsis* mutant died. A major difference between control and β-CCA-treated plant mutants during drought was that losses of water were drastically reduced in plant mutants pre-treated with β-CCA as compared with untreated plant mutants (Figures 6B). Thus, β-CCA treatment enables to maintain a higher water content in leaves under drought stress conditions, even in plants in which stomatal response to ABA is abolished.

The Inventors also showed that ion leakage in leaves under drought stress was noticeably reduced by β-CCA treatment (Figure 6C), indicating protection of leaf cell membranes.

### Conclusions

β-CCA is able to enhance noticeably the tolerance of plants to drought stress. This molecule is easily applicable to plants either by watering the soil with irrigation water containing β-CCA or by spraying the shoots or the leaves with β-CCA solution. β-CCA can be used pure in water or with additives.

### Example 2

Long-term exposure of Arabidopsis plants to β-CCA had no effect on the growth rate under normal conditions. Plants aged 10 days were watered for 30 days with water containing β-CCA in order to provide plants with 6 mg β-CCA per plant and per week. The results are shown in Figure 8. β-CCA has no effect on the growth rate in absence of hydric stress and has no toxicity.

## Claims

1. Use of β-cyclocitric acid, or a salt thereof for improving drought tolerance in a plant.

2. The use of claim 1, wherein β-cyclocitric acid or a salt thereof is for preventing, delaying or decreasing at least one effect of drought in the plant, said effect being selected from the group consisting of decrease in leaf expansion, leaf chlorosis, leaf scorches and necrosis, wilting, arrest or decrease in flowering, decrease in fruit or vegetable size, decrease in fruit or vegetable yield, decrease in plant size, accelerated senescence, premature plant death, premature flower drop, premature drop leaf drop, and decrease in seed production.

3. The use of claim 1 or 2, wherein β-cyclocitric acid or a salt thereof is further for improving the recovery of the plant after a drought stress, and/or for decreasing the water need in the plant.

4. The use of any one of claims 1-3, wherein β-cyclocitric acid or a salt thereof is applied to the plant by spraying, spreading, fogging, dipping, drenching, dusting, by injection into the plant, or by injection into the plant substrate.

5. The use of claim 4, wherein β-cyclocitric acid or a salt thereof is applied to the plant by foliar spraying or by adding β-cyclocitric acid or a salt in irrigation water.

6. The use of any one of claims 1-5 wherein β-cyclocitric acid or a salt thereof is applied to the plant prior to an event selected from the group consisting of meteorological drought, hydrological drought, irrigation withdrawal, the transplantation of the plant, the shipping of the plant and the retailing of the plant.

7. The use of claim 6, wherein β-cyclocitric acid or a salt thereof is applied one time or several times to the plant prior to said event.

8. The use of any one of claims 1-5, wherein β-cyclocitric acid or a salt thereof is applied to the plant at least once every three months.

9. The use of any one of claims 1-8 wherein the plant is a potted plant such as a houseplant or a bedding plant.

10. The use of any one of claims 1-9, wherein the plant is a crop plant growing in a field, a greenhouse or a covered field, and selected from the group consisting of *Solanaceae, Apiaceae,* fruit trees, *Poaceae,* and *Brassicaceae.*

11. The use of any one of claims 1-10, wherein β-cyclocitric acid or a salt thereof is present in a phytopharmaceutical composition which is in the form of an aqueous or a hydro-alcoholic composition, a paste, a gel, a glue, an emulsion, a micro-emulsion, a multiple emulsion, a liquid dispersion, a colloidal dispersion, a powder, a granule, a granulate, a water-dispersible tablet, a water soluble powder, and an aerosol.

12. Use of β-cyclocitric acid, or a salt thereof for increasing the shelf-life of a cut plant, for instance cut flowers.

13. A phytopharmaceutical composition for improving drought tolerance in a plant which comprises (i) β-cyclocitric acid or a salt thereof as active ingredient and (ii) at least one phytopharmaceutically acceptable excipient selected from pH modifiers, wetting agents and combinations thereof.

14. The phytopharmaceutical composition of claim 13, which comprises an additional active ingredient selected from phytohormones, herbicides, fungicides, pesticides, fertilizers, elicitors, plant growth regulators and combinations thereof.

15. A method for improving tolerance of a plant to drought stress, which comprises
- providing a phytopharmaceutical composition comprising β-cyclocitric acid or a salt thereof, and at least one phytopharmaceutically acceptable excipient selected from pH modifiers, wetting agents and combinations thereof and
- applying said phytopharmaceutical composition to the plant before, simultaneously or after exposure of the plant to a drought stress, said drought stress being selected from the group consisting of meteorological drought, hydrological drought, irrigation shortage or withdrawal, the transplantation of the plant, the shipping of the plant and the retailing of the plant.

## Patentansprüche

1. Verwendung von β-Cyclo-Zitronensäure oder ein Salz davon zur Verbesserung der Trockentoleranz in einer Pflanze.

2. Die Verwendung nach Anspruch 1, wobei β-Cyclo-Zitronensäure oder ein Salz davon zur Prävention, Verzögerung oder Abnahme mindestens eines Effekts der Trockenheit in der Pflanze ist, wobei dieser Effekt ausgewählt ist aus der Gruppe bestehend aus Abnahme der Blattexpansion, Blattchlorose, Blattverbrennungen und -nekrose, Welken, Verhindern oder Abnahme der Blüte, Abnahme in Frucht- oder Gemüsegröße, Abnahme in Frucht- oder Gemüseernte, Abnahme der Pflanzengröße, beschleunigte Seneszenz, vorzeitiger Pflanzentod, vorzeitiger Blütenabwurf, vorzeitiger Blattfall und Abnahme der Samenproduktion.

3. Die Verwendung nach Anspruch 1 oder 2, wobei β-Cyclo-Zitronensäure oder ein Salz davon ferner zur Verbesserung der Erholung der Pflanze nach einem Trockenheitsstress und/oder zur Verringerung des Wasserbedarfs in der Pflanze ist.

4. Die Verwendung nach einem der Ansprüche 1 bis 3, wobei β-Cyclo-Zitronensäure oder ein Salz davon der Pflanze durch Sprühen, Streuen, Nebeln, Eintauchen, Tränken, Stäuben, durch Injektion in die Pflanze oder durch Injektion in das Pflanzensubstrat appliziert wird.

5. Die Verwendung nach Anspruch 4, wobei β-Cyclo-Zitronensäure oder ein Salz davon der Pflanze durch Besprühen des Blattwerks oder durch Zugabe von β-Cyclo-Zitronensäure oder ein Salz davon in Bewässerungswasser appliziert wird.

6. Die Verwendung nach einem der Ansprüche 1 bis 5, wobei β-Cyclo-Zitronensäure oder ein Salz davon der Pflanze vor einem Ereignis ausgewählt aus der Gruppe bestehend aus meteorologischer Trockenheit, hydrologischer Trockenheit, Bewässerungsentzug, die Verpflanzung der Pflanze, der Versand der Pflanze und der Einzelhandel mit der Pflanze appliziert wird.

7. Die Verwendung nach Anspruch 6, wobei β-Cyclo-Zitronensäure oder ein Salz davon einmalig oder mehrere Male der Pflanze vor diesem Ereignis appliziert wird.

8. Die Verwendung nach einem der Ansprüche 1 bis 5, wobei β-Cyclo-Zitronensäure oder ein Salz davon mindestens einmal alle drei Monate der Pflanze appliziert wird.

9. Die Verwendung nach einem der Ansprüche 1 bis 8, wobei die Pflanze eine Topfpflanze, wie eine Zimmerpflanze oder eine Beetpflanze ist.

10. Die Verwendung nach einem der Ansprüche 1 bis 9, wobei die Pflanze eine Kulturpflanze ist, die auf einem Feld, in einem Gewächshaus oder einem abgedeckten Feld wächst, und ausgewählt ist aus der Gruppe bestehend aus *Solanaceae, Apiaceae,* Obstbäume, *Poaceae* und *Brassicaceae.*

11. Die Verwendung nach einem der Ansprüche 1 bis 10, wobei β-Cyclo-Zitronensäure oder ein Salz davon in einer phytopharmazeutischen Zusammensetzung vorhanden ist, die in der Form einer wässrigen oder einer hydroalkoholischen Zusammensetzung, einer Paste, eines Gels, eines Klebers, einer Emulsion, einer Mikroemulsion, einer multiplen Emulsion, einer flüssigen Dispersion, einer kolloidalen Dispersion, eines Pulvers, eines Körnchen, eines Granulats, einer Wasser-dispergierbaren Tablette, eines wasserlöslichen Pulvers und eines Aerosols ist.

12. Verwendung von β-Cyclo-Zitronensäure oder ein Salz davon zur Steigerung der Haltbarkeit einer geschnittenen Pflanze, zum Beispiel Schnittblumen.

13. Eine phytopharmazeutische Zusammensetzung zur Verbesserung der Trockenheitstoleranz in einer Pflanze, die (i) β-Cyclo-Zitronensäure oder ein Salz davon als Wirkstoff und (ii) mindestens einen phytopharmazeutisch-verträglichen Hilfsstoff ausgewählt aus pH-Modifikator, Benetzungshilfsmittel und Kombinationen davon umfasst.

14. Die phytopharmazeutische Zusammensetzung nach Anspruch 13, die eine zusätzlichen Wirkstoff ausgewählt aus Phytohormonen, Herbiziden, Fungiziden, Pestiziden, Düngemittel, Elizitoren, Pflanzenwachstumsregulatoren und Kombinationen davon umfasst.

15. Ein Verfahren zur Verbesserung der Toleranz einer Pflanze gegenüber Trockenheitsstress, das umfasst:
- Bereitstellen einer phytopharmazeutischen Zusammensetzung umfassend β-Cyclo-Zitronensäure oder ein Salz und mindestens einen phytopharmazeutisch-verträglichen Hilfsstoff ausgewählt aus pH-Modifikator, Benetzungshilfsmittel und Kombinationen davon und
- Applizieren der phytopharmazeutischen Zusammensetzung an die Pflanze bevor, gleichzeitig oder nachdem die Pflanze einem Trockenheitsstress ausgesetzt wurde, wobei der Trockenheitsstress ausgewählt ist aus der Gruppe bestehend aus meteorologischer Trockenheit, hydrologischer Trockenheit, Bewässerungsmangel oder -entzug, die Verpflanzung der Pflanze, der Versand der Pflanze und der Einzelhandel mit der Pflanze.

## Revendications

1. Utilisation d'acide β-cyclocitrique ou d'un sel de celui-ci pour améliorer la tolérance à la sécheresse chez une plante.

2. Utilisation selon la revendication 1, dans laquelle l'acide β-cyclocitrique ou un sel de celui-ci est destiné à prévenir, retarder ou diminuer au moins un effet de la sécheresse chez la plante, ledit effet étant choisi dans le groupe consistant en la diminution de l'expansion des feuilles, la chlorose des feuilles, la nécrose et le brunissement des feuilles, le flétrissement, l'arrêt ou la diminution de la floraison, la diminution de la taille des fruits ou des légumes, la diminution du rendement en fruits ou légumes, la diminution de la taille de la plante, la sénescence accélérée, la mort prématurée de la plante, la chute prématurée des fleurs, la chute prématurée des feuilles, et la diminution de la production de graines.

3. Utilisation selon la revendication 1 ou 2, dans laquelle l'acide β-cyclocitrique ou un sel de celui-ci est destiné, de plus, à améliorer le rétablissement de la plante après un stress de sécheresse, et/ou à diminuer les besoins en eau chez la plante.

4. Utilisation selon l'une quelconque des revendications 1 à 3, dans laquelle l'acide β-cyclocitrique ou un sel de celui-ci est appliqué à la plante par pulvérisation, étalement, brumisation, bain, arrosage, saupoudrage, par injection dans la plante, ou par injection dans le substrat de la plante.

5. Utilisation selon la revendication 4, dans laquelle l'acide β-cyclocitrique ou un sel de celui-ci est appliqué à la plante par pulvérisation foliaire ou par addition d'acide β-cyclocitrique ou d'un sel dans l'eau d'irrigation.

6. Utilisation selon l'une quelconque des revendications 1 à 5, dans laquelle l'acide β-cyclocitrique ou un sel de celui-ci est appliqué à la plante avant un évènement choisi dans le groupe consistant en une sécheresse météorologique, une sécheresse hydrologique, une interruption d'irrigation, la transplantation de la plante, l'expédition de la plante et la vente de la plante.

7. Utilisation selon la revendication 6, dans laquelle l'acide β-cyclocitrique ou un sel de celui-ci est appliqué une fois ou plusieurs fois à la plante avant ledit évènement.

8. Utilisation selon l'une quelconque des revendications 1 à 5, dans laquelle l'acide β-cyclocitrique ou un sel de celui-ci est appliqué à la plante au moins une fois tous les trois mois.

9. Utilisation selon l'une quelconque des revendications 1 à 8, dans laquelle la plante est une plante en pot telle qu'une plante d'intérieur ou une plante en massif.

10. Utilisation selon l'une quelconque des revendications 1 à 9, dans laquelle la plante est une plante de culture cultivée en plein champ, en serre ou dans un champ couvert, et choisie dans le groupe des Solanacées, Apiacées, arbres fruitiers, Poacées et Brassicacées.

11. Utilisation selon l'une quelconque des revendications 1 à 10, dans laquelle l'acide β-cyclocitrique ou un sel de celui-ci est présent dans une composition phytopharmaceutique qui est sous la forme d'une composition aqueuse ou hydro-alcoolique, une pâte, un gel, une colle, une émulsion, une micro-émulsion, une émulsion multiple, une dispersion liquide, une dispersion colloïdale, une poudre, un granule, un granulé, un comprimé dispersible dans l'eau, une poudre soluble dans l'eau et un aérosol.

12. Utilisation d'acide β-cyclocitrique ou d'un sel de celui-ci pour augmenter la durée de vie d'une plante coupée, par exemple de fleurs coupées.

13. Composition phytopharmaceutique pour améliorer la tolérance à la sécheresse chez une plante qui comprend (i) de l'acide β-cyclocitrique ou un sel de celui-ci en tant qu'ingrédient actif et (ii) au moins un excipient phytopharmaceutiquement acceptable choisi parmi les modificateurs de pH, les agents mouillants et des combinaisons de ceux-ci.

14. Composition phytopharmaceutique selon la revendication 13, qui comprend un ingrédient actif additionnel choisi parmi les phytohormones, les herbicides, les fongicides, les pesticides, les engrais, les éliciteurs, les régulateurs de la croissance végétale et des combinaisons de ceux-ci.

15. Méthode pour améliorer la tolérance d'une plante à un stress de sécheresse, qui comprend
- la fourniture d'une composition phytopharmaceutique comprenant de l'acide β-cyclocitrique ou un sel de celui-ci, et au moins un excipient phytopharmaceutiquement acceptable choisi parmi les modificateurs de pH, les agents mouillants et des combinaisons de ceux-ci et
- l'application de ladite composition phytopharmaceutique à la plante avant, pendant ou après l'exposition de la plante à un stress de sécheresse, ledit stress de sécheresse étant choisi dans le groupe consistant en une sécheresse météorologique, une sécheresse hydrologique, une réduction ou une interruption d'irrigation, la transplantation de la plante, l'expédition de la plante et la vente de la plante.
